# EUROPEAN PATENT SPECIFICATION

(11) **EP 2 911 068 B1**
(45) Date of publication and mention of the grant of the patent: **30.08.2017**
(21) Application number: 14155970.8
(22) Date of filing: 20.02.2014
(51) Int. Cl.: G06F 17/30, G06F 9/50

(54) **Tree-structure storage method for managing computation offloading data**
Baumstrukturspeicherverfahren zur Verwaltung der Berechnung von Datenabladung
Procédé de stockage de structure arborescente pour gérer des données de déchargement de calcul

(43) Date of publication of application: 26.08.2015
(73) Proprietor: Deutsche Telekom AG, 53113 Bonn (DE)
(72) Inventor: Hui, Pan, Hong Kong (CN); Li, Weikai, Hong Kong (CN); Wu, Ting, Hong Kong (CN); Peylo, Christoph, 49401 Damme (DE)
(74) Representative: Vossius & Partner Patentanwälte Rechtsanwälte mbB

(56) References cited:
- US-A1- 2012 260 157
- EDUARDO CUERVO ET AL: "MAUI: Making Smartphones Last Longer with Code Offload", PROCEEDINGS OF THE 8TH INTERNATIONAL CONFERENCE ON MOBILE SYSTEMS, APPLICATIONS, AND SERVICES, MOBISYS '10, 1 January 2010 (2010-01-01), page 49, XP055125674, New York, New York, USA DOI: 10.1145/1814433.1814441 ISBN: 978-1-60-558985-5
- SOKOL KOSTA ET AL: "ThinkAir: Dynamic resource allocation and parallel execution in the cloud for mobile code offloading", INFOCOM, 2012 PROCEEDINGS IEEE, IEEE, 25 March 2012 (2012-03-25), pages 945-953, XP032179206, DOI: 10.1109/INFCOM.2012.6195845 ISBN: 978-1-4673-0773-4
- BYUNG-GON CHIN ET AL: "CloneCloud: Elastic Execution between Mobile Device and Cloud", EUROSYS'11 : PROCEEDINGS OF THE EUROSYS 2011 CONFERENCE ; APRIL 10 - APRIL 13, 2011, SALZBURG, AUSTRIA, ACM, NEW YORK, NY , 10 April 2011 (2011-04-10), pages 301-314, XP002692201, ISBN: 978-1-4503-0634-8 Retrieved from the Internet: URL:http://eurosys2011.cs.uni-salzburg.at/ pdf/eurosys2011-chun.pdf [retrieved on 2013-02-15]

## Description

The present invention relates to managing intermediate data which is being generated by a cloud while processing an offloading task assigned by a user device (e.g. mobile device), and more particularly, to managing such intermediate data in a tree-structure method.

In an environment where devices equipped with varying computational capabilities and battery lifetime, developers and users have to offload some local computation intensive tasks for remote execution. Recently, lots of works have been done to construct computational network and develop applications in order to send tasks to the cloud for processing, such as MAUI [1], ThinkAir [2] and CloneCloud [3]. These approaches greatly reduce computational pressure on user devices (in particular mobile devices) and save the battery lifetime.
[1] Cuervo E, Balasubramanian A, Cho D, et al. MAUI: making smartphones last longer with code offload[C]//Proceedings of the 8th international conference on Mobile systems, applications, and services. ACM, 2010: 49-62.
[2] Sokol Kosta, Andrius Aucinas, Pan Hui, Richard Mortier, and Xinwen Zhang ThinkAir: Dynamic resource allocation and parallel execution in the cloud for mobile code offloading//In Proceeding of the 31st Annual IEEE International Conference on Computer Communications (IEEE INFOCOM 2012), Orlando, Florida USA, March 2012
[3] Chun B G, Ihm S, Maniatis P, et al. Clonecloud: elastic execution between mobile device and cloud[C]//Proceedings of the sixth conference on Computer systems. ACM, 2011: 301-314.
[4] Document US 2012/260157 is directed to a cooperative rendering cache browser for a mobile device that may cooperatively manage cached content with a proxy server.

An offloading task sends some raw data to the cloud for processing. These raw data are processed in a series of procedures and delivered to the user device as an execution result of the offloading task. Traditional offloading applications such as those indicated above only care about the execution result. We propose a useful method of managing intermediate data which is being generated during the processing, which will be explained hereinafter. In the specification, the term "intermediate data" refers to data which is being generated in a middle step of the offloading task and is still in processing (i.e. time-varying).

With the growing in storage space of portable computing devices, the devices can store more data. This opens up the possibility that a task (e.g. 3D-modeling), the result of which requires a relatively large storage capability, may be executed on the portable computing device.

We design a method to manage and utilize the intermediate data during the offloading using a tree-structure to manage the intermediate data; the tree-structure has good advantages in inserting and deleting a node as well as in maintaining the tree. This method also takes advantage of an increment data transmission approach, in order to improve the offloading performance in mobile computation environments.

One aspect of the present invention is to provide a method of managing intermediate data that is being generated and still in processing during an offloading computational task to a cloud, in which a user device connects to the cloud, and the cloud generates a set of data that will be delivered to the user device and form a result of the offloading task, the method comprising:
(a) a transmission handler on the user device delivers the offloading task to the cloud;
(b) the cloud analyzes whether the type of the offloading task is the one to which a tree-structure method is applicable, and in the affirmative, manages said intermediate data in the tree-structure method and, a transmission handler on the cloud transmits said intermediate data to the user device in increment data;
(c) the cloud creates a tree-structure file and a log file, the tree-structure file storing said intermediate data in the form of nodes of a tree, the log file including information on said tree-structure file, the tree-structure file and the log file both being updated during the offloading task;
(d) the transmission handler on the cloud transmits said log file to the user device; and
(e) the user device creates a tree-structure file on the user device so as to synchronize it to the tree-structure file on the cloud, based on the received intermediate data and the received log file.

When producing intermediate data during the remote execution, the cloud stores the intermediate data in nodes and inserts the nodes into the tree. In the present specification, we call this storing method a tree-structure method; intermediate data are stored in a tree-structure file in the forms of nodes of the tree. It costs very few computational resources and time to build and maintain a tree as well as to manage intermediate data. After constructing such a tree-structure file, it will be maintained at both the server (cloud) side and the user device (e.g. mobile device) side simultaneously. The tree-structure file will help users efficiently review the offloading task on the user device and reuse some data in the future.

We design two kinds of child nodes to store the intermediate data in an offloading task, and a method to create the tree-structure and decide the location of a new node in the tree-structure. When the tree is created, the user can get not only the final execution result, but also some intermediate data and sub-data. Thus when a similar offloading task is being executed, the user can take advantage of previous processed data that is stored in a tree. This greatly reduces the duplicated computational task.

The user device receives a log file that is created by the cloud. The tree-structure file and the log file will improve the offloading performance because the user device synchronizes its tree-structure file statue of the tree-structure file on the cloud, based on the received intermediate data and the received log file. For example, it will allow the user to check the rate of processing progress (e.g. 70% of the offloading task is completed) and/or review the (completed) offloading task or (already finished) different execution stages on the user device. When a disconnection occurs, the user device can efficiently judge the processing status on the cloud at the time of disconnection, and continue the unfinished part of the offloading task via the tree-structure file and the log file stored on the user device.

### BRIEF DESCRIPTION OF THE DRAWINGS

Figure 1 illustrates a schematic framework of a system that is adapted to use a managing method according to one embodiment of the present invention.
Figure 2 illustrates a flow diagram of one embodiment of the present invention.
Figure 3 illustrates a flow diagram that illustrates a transmission procedure by the transmission handler on the cloud.
Figure 4 illustrates an example of the tree-structure file.
Figure 5 illustrates an example of 3D-cow-model-processing task using the tree-structure file.
Figure 6 illustrates a flow diagram of constructing an original result file from the tree-structure file at the side of the mobile device.

### Detailed description of the preferred embodiments

A managing method according to preferred embodiments of the present invention will be described with reference to the accompanying drawings.

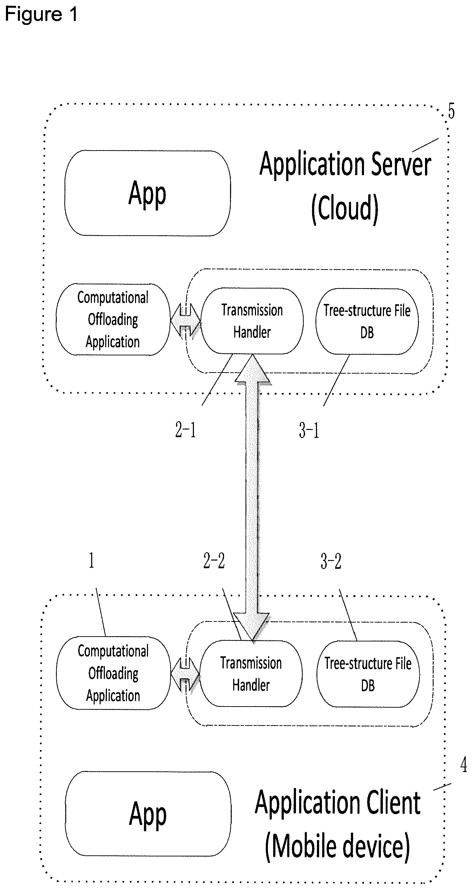

Figure 1 is a schematic framework of a system using a managing method according to an embodiment of the present invention. The system comprises an application client (mobile device, broadly user device) 4 and an application server (cloud) 5 for connection (in a wired or wireless manner) with each other.

The mobile device 4 is provided with a module 1, an independent computational offloading application (e.g. MAUI [1] or ThinkAir [2]) for deciding the offloading task, i.e. deciding which task should be offloaded to the cloud 5 for remote execution. The mobile device 4 is further provided with a module 2-2, transmission handler for delivering the task to the cloud 5.

When the task is under processing, the cloud 5 will keep creating intermediate data, and transmitting, via a module 2-1, another transmission handler on the cloud 5, the intermediate data to the mobile device 4. As will be explained below, the transmission handler 2-1 is adapted to transmit intermediate data as increment data. These two transmission handlers will connect each other and exchange data between the mobile device 4 and the cloud 5.

The cloud 5 is adapted to create and store a tree-structure file and a log file which are being generated (i.e. updated) during the processing. The tree-structure file stores intermediate data using a tree-structure method, i.e. in the form of nodes of a tree (which will be explained below in more detail). In one embodiment, the tree structure file and the log file are stored in a module 3-1, tree-structure file database. The log file may be stored in any other storage area on the cloud 5. The log file will be transmitted to the mobile device 4.

The mobile device 4 is adapted to create a tree-structure file locally so as to synchronize it to the tree-structure file on the cloud 5 based on the received log file and the received intermediate data. In one embodiment, the created tree-structure file is stored in a module 3-2, tree-structure database. The received log file may be stored in the tree-structure database 3-2 or any other storage area on the mobile device 4.

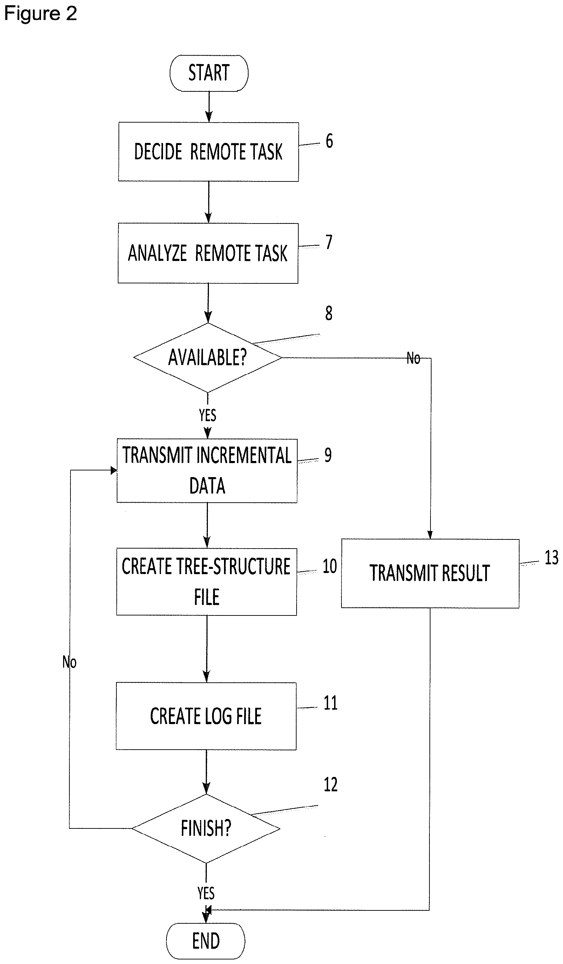

Figure 2 is a flow diagram that illustrates a managing method that is carried out by the system shown in Fig. 1, according to one embodiment of the present invention.

First in step 6, the independent computational offloading application 1 on the mobile device 4 decides the offloading task. Then, the transmission handler 2-2 on the mobile device 4 delivers the task to the cloud 5. The process proceeds to step 7, in which the cloud 5 receives the offloading task, and analyzes the task in order to estimate an execution time (which will explained below) on the cloud 5, and the process proceeds to step 8.

In step 8, the cloud 5 decides whether an increment data transmission approach and the tree-structure method is applicable or not to the offloading task. In the method according to the present invention, the transmission handler 2-1 will transmit the generated intermediate data back to the mobile device 4 in an increment data transmission approach. In the specification, the term "increment data transmission approach" refers to an approach that transmits only a portion of (time-varying) intermediate data that has changed since a prior transmission. This data designates "increment data" which is an increment between two intermediate data created on the cloud in different time.

The present invention uses a tree-structure method to manage intermediate data during the offloading task. The intermediate data will be stored in a tree-structure file, i.e. in nodes to create the tree. As mentioned above, a synchronized tree-structure file is created locally on the mobile device 4. Therefore, in one embodiment, the tree-structure file may be used to allow a user to review the whole offloading task and/or take the tree-structure file for further process. Since the tree structure has great advantages in inserting, deleting and maintaining, it costs a little to build and maintain the tree structure file during the offloading.

However, not all the offloading task can use the tree-structure method. The tree-structure method is applicable to offloading task with the following property: The intermediate data that is being created during the offloading task is dividable into small sections. These subsections can be aggregated again. Each subsection of the intermediate data is stored in a node of the tree. Therefore, during the offloading task the tree will change its form by addition of nodes, each of which stores a subsection which has not yet stored in any of the existing node(s).

When the offloading task has this property, the increment data can also be obtained for the increment data transmission approach.

For example, a data file of 3D model can be divided in a set of meshes. The meshes can reconstruct the 3D models. In this scenario, each subsection of intermediate data may be a sub-set of these meshes. The sub-set of meshes will be stored in a node, and the node is inserted into the tree. In one embodiment, increment data is equal to each subsection of intermediate data (that is, the subsection is transmitted at a time). However, when each subsection of intermediate data is further dividable, increment data for the increment data transmission approach may be one or more divisions of each subsection (e.g. increment data is equal to one mesh only). So for this offloading task of processing 3D model, the tree-structure method and the increment data transmission approach are available.

As a preferable property of the offloading task, the task may be processed in a series of separate procedures in the sense that the generated data of each procedure is stored as a node of the tree (i.e. to build a single node one procedure is required). As an example to explanation, a 3D cow model may be processed in three procedures: adding detailed meshes of a head of the cow, adding detailed meshes of a tail of the cow, and adding a texture of cow. The generated data of these three procedures will be stored in three nodes, which will then be inserted to the tree.

Referring back to Fig, 2, if the increment data transmission approach and the tree-structure method are applicable, the process proceeds to step 9. The cloud 5 will start to run the offloading task and deliver the current execution result (current intermediate data) to the transmission handler 2-1, in a pre-set period (which will be explained below). The transmission handler 2-1 compares each delivered data (i.e. compares the current intermediate data with previous intermediate data) to get increment data, and transmits the increment data to the mobile device 4 in step 9.

In step 10, the cloud 5 manages these transmitted data in the tree-structure method. The cloud 5 stores a tree-structure file (storing the intermediate data in the form of nodes in a tree) in the database 3-1. Then the process proceeds to step 11, the cloud 5 creates a log file including information on the tree-structure file. In one embodiment, the log file records the information of the transmission including transmission data ID, location of the increment data (i.e. subsection of intermediate data) in the tree and/or the operations to the tree. The operations to the tree include when and where to insert a new node. In one example, the transmission handler 2-1 on the cloud 5 may create the log file. In another example, (other component of) the cloud 5 may create the log file based on information on the operations that the component itself has created as well as on transmission data ID and location of the increment data supplied from the transmission handler 2-1.

The log file is transmitted to the mobile device 4.

In step 12, if the task is finished, the process ends. Otherwise, then process proceeds to step 9, the transmission handler 2-1 on the cloud 5 keeps receiving the current execution result and transmitting the increment data.

In step 8, if the increment data transmission approach and the tree-structure method are not applicable to the offloading task, the process proceeds to step 13. For example, if the offloading task only requires data (for instance, date and time (of e.g. Germany), photo) that exists on the cloud 5 (but are not available to the mobile device 4) or running codes on the cloud 5, the increment data transmission approach and the tree-structure method are not available for this offloading task. The cloud 5 will run the offloading task and transmit the result to the mobile device in a normal approach, such as only delivering the final execution result to the mobile device 4. Then the process proceeds to an end. The same applies when intermediate data is not dividable. That is, when intermediate data is not dividable (e.g. an offloading task of creating a graph), only the final execution result is delivered to the mobile device 4.

In one embodiment, after the cloud 4 confirms each processing procedure (in other words, the cloud 4 confirms how the offloading task should be done) and initiates the procedure, the transmission handler 2-1 on the cloud 4 may deliver increment data of each processing procedure in several batches, instead of one batch, which corresponds to a case where increment data is equal to a subsection (e.g. texture of the cow in case of creating a 3D cow model) of intermediate data. This will reduce bandwidth usage.

As the pre-set transmission period, the cloud may set, for example, 1 second as default. Depending on the varying offloading task, the cloud may adjust the transmission period to a proper one. The transmission handler 2-1 on the cloud 4 acquires a current procedure's estimated execution time in step 7. The frequency of transmission (i.e. times to transmit the data in one procedure) may preferably be at least 10 times, and at most 100 times. Then, the procedure's estimated execution time is divided by the frequency of transmission to get the transmission period. The cloud 4 will adjust (increase or decrease) the frequency of transmission to make the transmission period close to 1 second. However, if the frequency of transmission is out of the above-mentioned preferable range, the cloud 4 may increase and decrease the transmission period to make the frequency of transmission acceptable. The transmission handler 2-1 on the cloud 4 will keep transmitting the data in this pre-set period until finishing the current procedure.

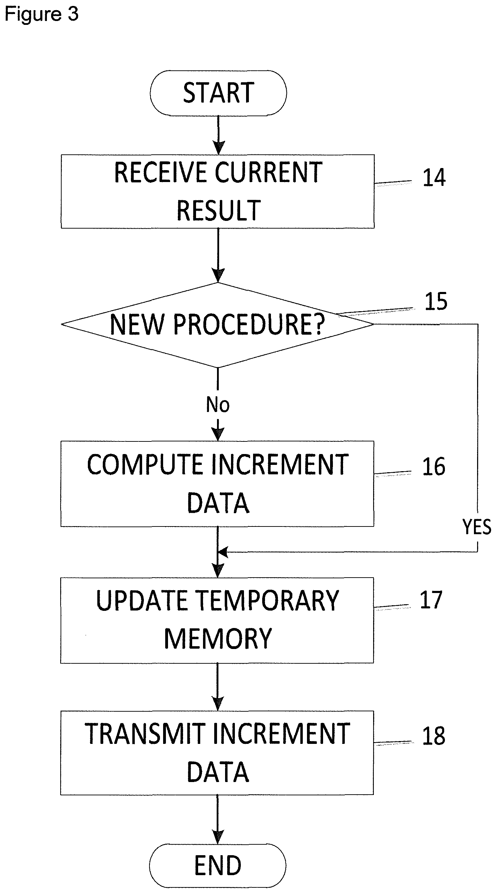

Figure 3 is a flow diagram illustrating how the transmission handler 2-1 on the cloud 4 works in one embodiment of the present invention. First in step 14, the transmission handler 2-1 obtains the current execution result and execution status (whether or not the procedure is new) in a pre-set period, and the process proceeds to step 15. In step 15, if the handler 2-1 receives some data (execution result) from this procedure before (i.e. the procedure is not new; this corresponds to delivering increment data of one processing procedure in several batches), the process proceeds to step 16. In step 16, the current execution result is compared with the former result that is stored in a temporary memory (not shown). The transmission handler 2-1 uses a subtraction method to get increment data.

For example, when a 3D cow model is processed on the cloud, the first procedure may be creating skeleton meshes of the 3D cow. Then, the skeleton meshes of the 3D cow are stored in the temporary memory. After that, the next procedure may be to create detailed meshes of the cow's head. When this procedure is finished, the current execution result is compared to the former result in order to get increment data which is the meshes of the cow's head. Then, this 3D cow with a detail head will be stored in the temporary memory instead of the former one. After this step, the process proceeds to step 17. In step 15, if the handler 2-1 does not receive any data (execution result) from this procedure before, the process also proceeds to step 17. In step 17, the temporary memory stores the current execution result. The result in the temporary memory will be kept until the memory is updated. Finally in step 18, the transmission handler 2-1 transmits the increment data to the mobile device 4 and the process proceeds to an end.

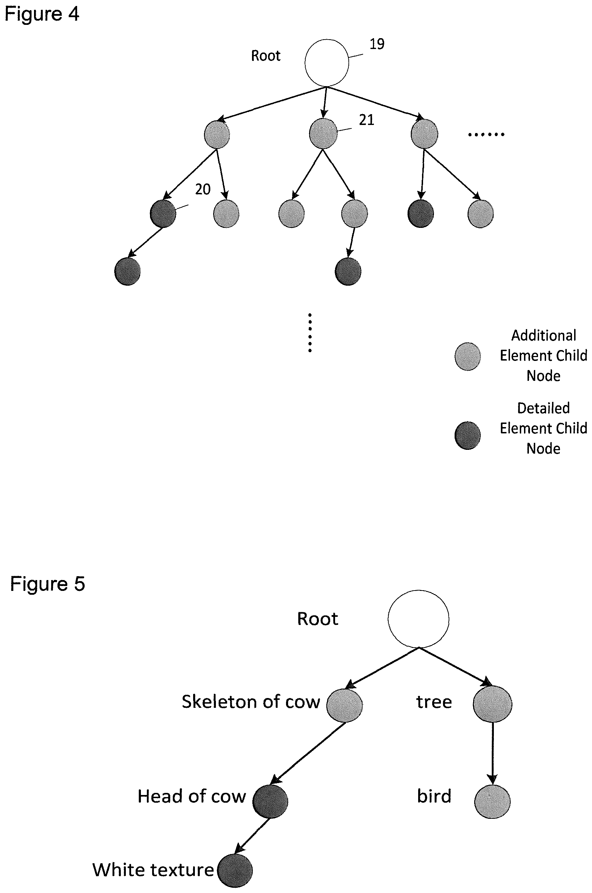

Figure 4 shows an example of a tree-structure file. A node 19 is a root to initialize the tree, and the root will not store any data. When the cloud 5 finishes one procedure of the offloading task, if the subsection data (of intermediate data) of this procedure enriches intermediate data in comparison to an existing node, this subsection data will be stored in a node 20 as the existing node's child node or leaf node. In the specification the node 20 is referred to as Detailed Element Node.

If the subsection data (of intermediate data) of the procedure is independent, the tree will create a node 21 which stores the subsection data. In the specification the node 21 is referred to as Additional Element Node. An additional element node 21 will be linked to the root 19. In other words, the child node of the root will necessarily be an additional element node. However, in some cases, another element node may be linked to an additional element node which may or may not be a child node of the root (e.g. grandfather, parent and child additional element nodes may be linked to each other while the grandfather additional element node is linked to the root). Specifically, the child additional element node may be independent of its parent additional element node in the sense that the child additional element node does not enrich intermediate data in comparison to the parent additional element node, but is associated with the parent additional element node. The location of the child additional element node in the tree describes the relationship to its parent additional element node. In summary, an additional element node can only be linked to other additional element node or a root as its child node.

Figure 5 shows an example of a 3D-cow-model-processing offloading task to illustrate the tree-structure file. A root is created to initialize the tree. And the cloud will start to run this offloading task.

First, when the procedure of meshes of the skeleton is finished, the tree will create an additional element node to store these meshes, because the subsection data is the meshes of the skeleton and independent (there is only a root). Second, when the cloud finishes the procedure of detailed meshes of cow's head, this subsection data (meshes of cow's head) will be stored in a detailed element node which links to the node of the skeleton, because this subsection data enriches the detailed meshes of the skeleton of the cow. Third, when the cloud creates a white texture of the cow, the data of the white texture will be also stored in a detailed element node which is linked to the node of the detailed head. This is because the data of the while texture enriches current intermediate data (skeleton + head) in comparison to the node of the head of cow. However, the detailed element node may be directly linked to the node of the skeleton (that is an additional element node) because the data of the while texture enriches intermediate data at the time of creating the skeleton.

Forth, if a model of a tree near the cow is additionally created, because the tree has little or no relationship to the cow, the meshes of tree will be stored in an additional element node. This additional element node will be linked to the root. Finally, if a bird is created on the tree, the meshes of the bird will be stored in another additional element node. Because the bird is independent of the tree in the sense that the meshes of bird do not enrich current intermediate data (skeleton + head + texture + tree) in comparison to the node of tree, but the bird belongs to the tree (in other words, the bird is associated with the tree), this node may be linked to the parent node of the tree to describe this relationship. The benefit is that if a user wants to delete the tree, any element associated with the tree (in the present case, bird) will be deleted with the tree. However, the node of bird may be directly linked to the root.

It is to be noted that in the specification the term "enrich" means improving the quality of intermediate data. For example, the addition of a bird does not improve the quality of intermediate data. On the other hand, the addition of a head of the cow improves the quality of intermediate data because the cow will become more specific.

This tree-structure file is easy to modify and reuse. If other offloading task requests a black cow, the cloud just needs to change the white texture which is stored in one detailed element node to the black texture.

A picture-processing offloading task will be explained to illustrate the tree-structure file. A picture is sent from the mobile device to the cloud for processing. First, a root is created to initialize the tree, and an additional element node is created to store the original picture. Then, tone of the picture is changed, and these changed data (i.e. subsection data of intermediate data) will be stored in a detailed element node which links to the additional element node. Then, if an image filter is used to process the picture, these processed data (i.e. subsection data of intermediate data) will also be stored in a detailed element node. Finally, when a border or text on the picture is added, it will be stored in a new additional element node which links to the additional element node of the original picture because the child additional element node (border or text) does not enrich current intermediate data (original picture + tone + filter) in comparison to the parent additional element node (original picture).

As will be appreciated by the skilled person in the art, the tree-structure method is applicable to various offloading tasks (e.g. creating sound data), other than those explained above, as long as intermediate data that is being created during the offloading task is dividable.

In one embodiment, an additional element node may have one or more branches which contain only detailed element nodes to enrich its details (in case of the 3D cow model, the node of white texture is linked to the node of skeleton). Any new detailed element nodes to this additional element node will be linked to these branches as their leaf nodes, or linked to this additional element node to create new branches. The term "branch" refers to a sub-tree. The term "leaf node" refers to a node without child node.

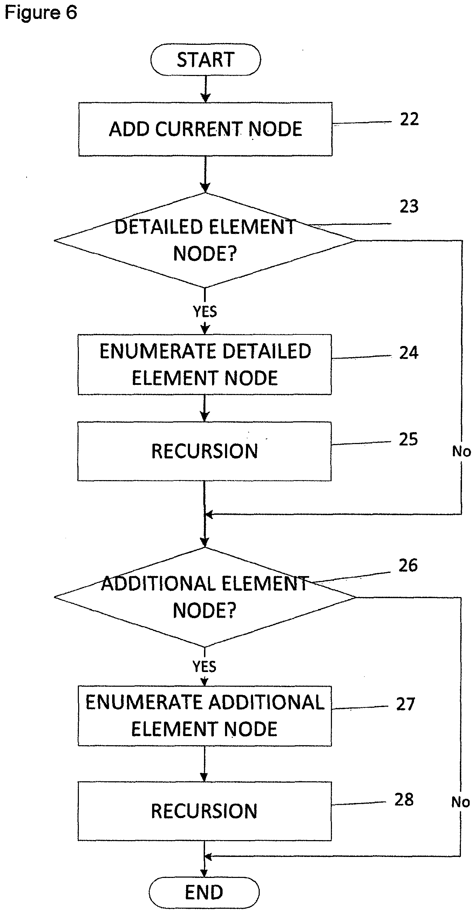

Figure 6 shows a flow diagram illustrating a depth first search method that is carried out by the mobile device 4 for reconstructing the tree-structure file to an original result file. The depth first search method is a recursion which is the process of repeating items in a self-similar way. The method starts to search the tree from the root. In step 22, the data in a current node is added to a result file and the process proceeds to step 23. If the current node has detailed element nodes in its sub-tree, the process proceeds to step 24. In step 24, all the detailed element nodes will be enumerated, and the process proceeds to step 25. In step 25, the recursion starts from one selected detailed element node. After finishing the recursion, the process proceeds to step 26. In step 23, if the current node does not have any other detailed element node, the process also proceeds to step 26.

In step 26, if the current node has additional element nodes in its sub-tree, the process proceeds to step 27. All the additional element nodes will be enumerated in step 27. And in step 28, a recursion is started from one selected additional element node. After finishing the recursion, the process proceeds to an end. In step 26, if the current node does not have any other additional element node, the process also proceeds to an end. After the recursion method, the mobile device 4 reconstructs the tree-structure file to a completed result file.

As will be appreciated by the skilled person in the art, reconstructing an original result file is not limited to the method explained above. For example, the method may first search additional element nodes, instead of detailed element nodes.

In one embodiment, an additional element node and its sub-tree may construct a complete sub-file. For example, in figure 5, the whole tree may construct a white cow with a detailed head and a tree with birds. The right two nodes construct a tree with birds, which represents a sub-file.

As mentioned above, the log file that is created/updated by the cloud 5 and delivered to the mobile device 4 includes information on the tree-structure file. In one embodiment, the log file records the transmission information including the sequence number of the transmission, file type (e.g. image, sound) of the transmitted (increment) data, the subsection data's location in the tree, and/or change of the tree-structure file during the offloading including when and where to insert a new node.

As explained above, the tree-structure file and the log file may be saved in a single tree-structure file database 3-1. The tree-structure file database may have two tables. Table 1 stores the tree-structure file, with the start date and end date of the remote execution of the offloading task, transmission times, log file ID (foreign key), nodes number and a tree-structure file ID as primary key. Table 2 stores log file ID as primary key and the log file.

Applications can be developed based on the tree-structure files to improve the offloading performance. For example, an application may check the current running rate and decide the next running task on the local mobile device. When the mobile device offloads a model-processing task to the cloud, the mobile device keeps receiving the increment data to update the tree-structure file and display the current result on the mobile device. The mobile device will show a simple model becoming complex. The user of the mobile device may stop the offloading task which is being executed by the cloud at any time to review (already finished) different execution stages, and change the model processing priority via changing the view of the model in order to see a more detailed model under the current view.

When a task is offloaded to the cloud, the cloud may search the tree-structure file database. If a similar task is already done, the cloud may request the mobile device to directly find the result on the local mobile device.

When a disconnection occurs, the mobile device may search the tree stored in the tree-structure file of its own, and find the last created node in order to get the current state and the break point. Then, the data related to the offloading task that is saved in the tree-structure file of the mobile device will be sent to a local mobile application of the mobile device (see Fig. 1) to continue the unfinished part of the task.

At the same time, the cloud may keep running the task. In this embodiment, after connection recoveries, the local mobile device receives current running status of the offloading task on the cloud so as to synchronize its current running status to the cloud. The cloud then continues the offloading task.

The present invention is defined by the following claims, this section has been provided merely by way of detailed description.

## Claims

1. Method of managing intermediate data that is being generated at a cloud (5) during the execution of an offloading computational task in the cloud, in which a user device (4) connects to the cloud, and the cloud delivers said intermediate data to the user device, said intermediate data being a time-varying, current execution result of the offloading task that is still in processing, the method comprising:
(a) a transmission handler (2-2) on the user device delivers (6) the offloading task to the cloud;
(b) the cloud analyzes (8) whether the type of the offloading task is the one in which its intermediate data is dividable into subsections that are aggregatable again, and in the affirmative, stores said intermediate data by creating (10) a tree-structure file (3-1) storing said intermediate data in the form of nodes of a tree such that each subsection of said intermediate data is stored in a node of the tree, the tree-structure file (3-1) being updated during the execution of the offloading task while the tree changes its form by insertion of new nodes, each of which stores a subsection which has not yet been stored in any of the existing node or nodes, and, a transmission handler (2-1) on the cloud transmits (9) said intermediate data to the user device in increment data in such a manner that the transmission handler (2-1) transmits, as said increment data, a subsection of said time-varying, current intermediate data that has changed since a previous transmission;
(c) the cloud creates (11) file (3-1), a log file, including information on said tree-structure file (3-1), the log file being updated during the execution of the offloading task, the log file recording transmission data ID, information on the update of the tree-structure file (3-1) including when and where to insert a new node, and on each subsection's location in the tree;
(d) the transmission handler (2-1) on the cloud transmits said log file to the user device; and
(e) the user device creates a tree-structure file (3-2) on the user device so as to synchronize it to the tree-structure file (3-1) on the cloud, based on the received intermediate data and the received log file.

2. Method according to claim 1, wherein an independent offloading application on the user device decides which computational task should be offloaded to the cloud for remote execution.

3. Method according to claim 1, wherein the log file further records information of the increment data transmission including file type of the transmitted data.

4. Method according to claim 1, wherein the transmission handler on the cloud compares current intermediate data with previous intermediate data to obtain the increment data.

5. Method according to claim 1, wherein the tree-structure file has three kinds of node comprising:
(a) root, which initiates the tree;
(b) additional element node, which stores data that is independent of its parent node; and
(c) detailed element node, which stores data that enriches intermediate data in comparison to its parent node.

6. Method according to claim 5, wherein a parent node of the additional element node is (i) an addition element node or (ii) the root, and, in case of (i), the child additional element node is independent of its parent additional element node in the sense that the child additional element node does not enrich intermediate data in comparison to the parent additional element node, but is associated with the parent additional element node.

7. Method according to claim 1 to 6, wherein when a disconnection occurs, the user device judges processing status of the offloading task on the cloud at the time of disconnection based on the log file and the tree-structure file stored in the user device, and continues an unfinished part of the offloading task on the user device.

8. Method according to claim 7, wherein the cloud keeps running the offloading task after the disconnection occurs, and, after connection recovery, the user device receives current running status of the offloading task on the cloud so as to synchronize current running status of the offloading task on the user device to the received current running status of the offloading task on the cloud.

9. Method according to claim 1 to 6, wherein based on the log file and the tree-structure file stored in the user device, an application function is designed to check, on the user device, a current execution stage of the offloading task by the cloud.

10. Method according to claim 1 to 6, wherein based on the log file and the tree-structure file stored in the user device, an application function is designed to review, on the user device, different execution stages of the offloading task by the cloud.

## Patentansprüche

1. Verfahren zur Verwaltung von Zwischendaten, die in einer Cloud (5) während der Ausführung einer Abladerechenaufgabe in der Cloud erzeugt werden, wobei eine Benutzervorrichtung (4) sich mit der Cloud verbindet und die Cloud die Zwischendaten an die Benutzervorrichtung liefert, wobei die Zwischendaten ein zeitlich veränderliches aktuelles Ausführungsergebnis der Abladeaufgabe sind, die immer noch in Bearbeitung ist, wobei das Verfahren aufweist:
(a) eine Übertragungssteuerung (2-2) auf der Benutzervorrichtung liefert (6) die Abladeaufgabe an die Cloud;
(b) die Cloud analysiert (8), ob die Art der Abladeaufgabe die ist, bei der ihre Zwischendaten in Teilabschnitte teilbar sind, die wieder vereinigbar sind, und speichert im Ja-Fall die Zwischendaten, indem sie eine Baumstrukturdatei (3-1) erzeugt (10), welche die Zwischendaten in der Form von Knoten eines Baums speichert, so dass jeder Teilab-schnitt der Zwischendaten in einem Knoten des Baums gespeichert wird, wobei die Baumstrukturdatei (3-1) während der Ausführung der Abladeaufgabe aktualisiert wird, während der Baum durch das Einsetzen neuer Knoten, von denen jeder einen Teilabschnitt speichert, der noch in keinem der/des vorhanden Knoten/s gespeichert wurde, seine Form ändert, und eine Übertragungssteuerung (2-1) auf der Cloud die Zwischendaten in Inkrementdaten in einer derartigen Weise an die Benutzervorrichtung überträgt (9), dass die Übertragungssteuerung (2-1) als die Inkrementdaten einen Teilabschnitt der zeitlich veränderlichen aktuellen Zwischendaten überträgt, der sich seit einer vorhergehenden Übertragung geändert hat;
(c) die Cloud eine Protokolldatei erzeugt (11), die Informationen über die Baumstrukturdatei (3-1) enthält, wobei die Protokolldatei während der Ausführung der Abladeaufgabe aktualisiert wird, wobei die Protokolldatei die Übertragungsdaten-ID, Informationen über die Aktualisierung der Baumstrukturdatei (3-1) einschließlich wann und wo ein neuer Knoten eingefügt werden soll, und über den Ort jedes Unterabschnitts in dem Baum umfasst;
(d) die Übertragungssteuerung (2-1) auf der Cloud die Protokolldatei an die Benutzervorrichtung überträgt; und
(e) der Benutzer eine Baumstrukturdatei (3-2) auf der Benutzervorrichtung erzeugt, um sie basierend auf den empfangenen Zwischendaten und der empfangenen Protokolldatei mit der Baumstrukturdatei (3-1) auf der Cloud zu synchronisieren.

2. Verfahren nach Anspruch 1, wobei eine unabhängige Abladeanwendung auf der Benutzervorrichtung entscheidet, welche Rechenaufgabe für die entfernte Ausführung an der Cloud abgeladen werden sollte.

3. Verfahren nach Anspruch 1, wobei die Protokolldatei ferner Informationen der Inkrementdatenübertragung einschließlich des Dateityps der übertragenen Daten aufzeichnet.

4. Verfahren nach Anspruch 1, wobei die die Übertragungssteuerung auf der Cloud aktuelle Zwischendaten mit vorhergehenden Zwischendaten vergleicht, um die Inkrementdaten zu erhalten.

5. Verfahren nach Anspruch 1, wobei die Baumstrukturdatei drei Arten von Knoten hat, die aufweisen:
(a) eine Wurzel, die den Baum beginnt;
(b) einen Zusatzelementknoten, der Daten speichert, die unabhängig von seinem Elternknoten sind; und
(c) einen Detailelementknoten, der Daten speichert, die Zwischendaten im Vergleich zu seinem Elternknoten anreichern.

6. Verfahren nach Anspruch 5, wobei ein Elternknoten des Zusatzelementknotens (i) ein Zusatzelementknoten oder (ii) die Wurzel ist, und im Fall von (i) der Kindzusatzelementknoten in dem Sinn unabhängig von seinem Elternzusatzelementknoten ist, dass der Kindzusatzelementknoten im Vergleich zu dem Elternzusatzelementknoten Zwischendaten nicht anreichert, aber mit dem Elternzusatzelementknoten verknüpft ist.

7. Verfahren nach Anspruch 1 bis 6, wobei, wenn eine Trennung stattfindet, die Benutzervorrichtung den Verarbeitungsstatus der Abladeaufgabe auf der Cloud zu der Zeit der Trennung basierend auf der Protokolldatei und der Baumstrukturdatei, die in der Benutzervorrichtung gespeichert sind, beurteilt und dann einen nicht beendeten Teil der Abladeaufgabe auf der Benutzervorrichtung fortsetzt.

8. Verfahren nach Anspruch 7, wobei die Cloud die Abladeaufgabe, nachdem die Trennung auftritt, am Laufen hält und die Benutzervorrichtung nach der Verbindungswiederherstellung den aktuellen Ablaufstatus der Abladeaufgabe auf der Cloud empfängt, um den aktuellen Ablaufstatus der Abladeaufgabe auf der Benutzervorrichtung mit dem empfangenen aktuellen Ablaufstatus der Abladeaufgabe auf der Cloud zu synchronisieren.

9. Verfahren nach Anspruch 1 bis 6, wobei eine Anwendungsfunktion konstruiert ist, um basierend auf der Protokolldatei und der Baumstrukturdatei, die in der Benutzervorrichtung gespeichert sind, ein aktuelles Ausführungsstadium der Abladeaufgabe durch die Cloud auf der Benutzervorrichtung zu prüfen.

10. Verfahren nach Anspruch 1 bis 6, wobei eine Anwendungsfunktion konstruiert ist, um basierend auf der Protokolldatei und der Baumstrukturdatei, die in der Benutzervorrichtung gespeichert sind, verschiedene Ausführungsstadien der Abladeaufgabe durch die Cloud auf der Benutzervorrichtung zu bewerten.

## Revendications

1. Procédé de gestion de données intermédiaires qui sont générées au niveau d'un Cloud (5) pendant l'exécution d'une tâche informatique de déchargement dans le Cloud, dans lequel un dispositif utilisateur (4) se connecte au Cloud, et le Cloud délivre lesdites données intermédiaires au dispositif utilisateur, lesdites données intermédiaires étant un résultat d'exécution en cours variant avec le temps de la tâche de déchargement qui est toujours en traitement, le procédé comprenant :
(a) un gestionnaire de transmission (2-2) sur le dispositif utilisateur délivre (6) la tâche de déchargement au Cloud ;
(b) le Cloud analyse (8) si le type de la tâche de déchargement est celui dans lequel ses données intermédiaires sont divisibles en sous-sections qui peuvent s'agréger à nouveau, et dans l'affirmative, stocke lesdites données intermédiaires en créant (10) un fichier d'arborescence (3-1) stockant lesdites données intermédiaires sous forme de noeuds d'un arbre de sorte que chaque sous-section desdites données intermédiaires soit stockée dans un noeud de l'arbre, le fichier d'arborescence (3-1) étant mis à jour pendant l'exécution de la tâche de déchargement tandis que l'arbre change sa forme par l'insertion de nouveaux noeuds, dont chacun stocke une sous-section qui n'a pas encore été stockée dans l'un quelconque du noeud ou des noeuds existants, et un gestionnaire de transmission (2-1) sur le Cloud transmet (9) lesdites données intermédiaires au dispositif utilisateur en données d'incrément de manière à ce que le gestionnaire de transmission (2-1) transmette, en tant que lesdites données d'incrément, une sous-section desdites données intermédiaires en cours variant avec le temps qui ont changé depuis une transmission précédente ;
(c) le Cloud crée (11) un fichier de journalisation, comportant des informations sur ledit fichier d'arborescence (3-1), le fichier de journalisation étant mis à jour pendant l'exécution de la tâche de déchargement, le fichier de journalisation enregistrant un ID de données de transmission, des informations sur la mise à jour du fichier d'arborescence (3-1) incluant le moment et l'endroit où insérer un nouveau noeud, et sur chaque emplacement de sous-section dans l'arbre ;
(d) le gestionnaire de transmission (2-1) dans le Cloud transmet ledit fichier de journalisation au dispositif utilisateur ;
et
(e) le dispositif utilisateur crée un fichier d'arborescence (3-2) sur le dispositif utilisateur de façon à le synchroniser au fichier d'arborescence (3-1) dans le Cloud, d'après les données intermédiaires reçues et le fichier de journalisation reçu.

2. Procédé selon la revendication 1, dans lequel une application de déchargement indépendante sur le dispositif utilisateur décide quelle tâche informatique doit être déchargée dans le Cloud pour une exécution à distance.

3. Procédé selon la revendication 1, dans lequel le fichier de journalisation enregistre en outre des informations de la transmission de données d'incrément incluant un type de fichier des données transmises.

4. Procédé selon la revendication 1, dans lequel le gestionnaire de transmission dans le Cloud compare des données intermédiaires en cours à des données intermédiaires précédentes pour obtenir les données d'incrément.

5. Procédé selon la revendication 1, dans lequel le fichier d'arborescence comporte trois sortes de noeuds comprenant :
(a) une racine, qui amorce l'arbre ;
(b) un noeud d'élément supplémentaire, qui stocke des données, qui sont indépendant de son noeud parent ; et
(c) un noeud d'élément détaillé, qui stocke des données, qui enrichit des données intermédiaires en comparaison à son noeud parent.

6. Procédé selon la revendication 5, dans lequel un noeud parent du noeud d'élément supplémentaire est (i) un noeud d'élément d'addition ou (ii) la racine, et, dans le cas de (i), le noeud d'élément supplémentaire enfant est indépendant de son noeud d'élément supplémentaire parent dans le sens où le noeud d'élément supplémentaire enfant n'enrichit pas des données intermédiaires en comparaison au noeud d'élément supplémentaire parent, mais est associé au noeud d'élément supplémentaire parent.

7. Procédé selon les revendications 1 à 6, dans lequel lorsqu'une déconnexion se produit, le dispositif utilisateur estime un statut de traitement de la tâche de déchargement dans le Cloud au moment de la déconnexion d'après le fichier de journalisation et le fichier d'arborescence stockés dans le dispositif utilisateur, et poursuit une partie inachevée de la tâche de déchargement sur le dispositif utilisateur.

8. Procédé selon la revendication 7, dans lequel le Cloud continue d'exécuter la tâche de déchargement après que la déconnexion se produit, et, après une récupération de connexion, le dispositif utilisateur reçoit un statut d'exécution en cours de la tâche de déchargement dans le Cloud de façon à synchroniser un statut d'exécution en cours de la tâche de déchargement sur le dispositif utilisateur avec le statut d'exécution en cours reçu de la tâche de déchargement dans le Cloud.

9. Procédé selon les revendications 1 à 6, dans lequel d'après le fichier de journalisation et le fichier d'arborescence stockés dans le dispositif utilisateur, une fonction d'application est conçue pour vérifier, sur le dispositif utilisateur, un stade d'exécution en cours de la tâche de déchargement par le Cloud.

10. Procédé selon les revendications 1 à 6, dans lequel d'après le fichier de journalisation et le fichier d'arborescence stockés dans le dispositif utilisateur, une fonction d'application est conçue pour examiner, sur le dispositif utilisateur, des stades d'exécution différents de la tâche de déchargement par le Cloud.
